# EUROPÄISCHE PATENTANMELDUNG

(11) **EP 1 088 723 A2**
(43) Veröffentlichungstag der Anmeldung: **04.04.2001**
(21) Anmeldenummer: 00120549.1
(22) Anmeldetag: 20.09.2000
(51) Int. Cl.: B60T 7/08

(54) **Betätigungseinrichtung für eine Bremse**

(30) Priorität: 22.09.1999 DE 19945459
(71) Anmelder: FIAT OM CARRELLI ELEVATORI S.p.A., 20141 Milano (IT)
(72) Erfinder: Pampuri, Francesco, Dipl.-Ing., 20123 Milano (IT)
(74) Vertreter: Geirhos, Johann

(57) **Zusammenfassung**

Die Erfindung betrifft eine Betätigungseinrichtung für eine Bremse, insbesondere einer als Seilzugbremse ausgebildete Feststellbremse, mit einem schwenkbar gelagerten Betätigungshebel (7), der mittels einer Koppeleinrichtung (8), insbesondere einer Zugstange, mit einem Bremskraftübertragungsmittel, insbesondere einer Seilrolle, in Wirkverbindung steht, wobei der Betätigungshebel (7) zwischen einer Lösestellung und einer Bremsstellung schwenkbar ist und in der Bremsstellung eine Totpunktverriegelung des Betätigungshebels (7) vorgesehen ist. Die Aufgabe, eine Betätigungseinrichtung für eine Bremse mit einer Totpunktverriegelung in der Bremsstellung zur Verfügung zu stellen, die eine hohe Sicherheit aufweist, wird erfindungsgemäß dadurch gelöst, daß eine Feststelleinrichtung (15) für den Betätigungshebel (7) in der Bremsstellung vorgesehen ist, wobei die Lösekraft (F_{E}) der Feststelleinrichtung (15) und die Lösekraft (F_{L}) des Betätigungshebels (7) unterschiedliche Richtungen aufweisen. Die Feststelleinrichtung (15) besteht gemäß einer Ausführungsform der Erfindung aus einem an einem Entriegelungshebel (18), der am Betätigungshebel (7) schwenkbar gelagert ist, angeordneten Sperrbolzen (16), der in der Bremsstellung mit einer Sperrfläche (22) einer Sperrplatte (17), die an der Koppeleinrichtung (8) angeordnet ist, in Wirkverbindung steht.

## Beschreibung

Die Erfindung betrifft eine Betätigungseinrichtung für eine Bremse, insbesondere einer als Seilzugbremse ausgebildete Feststellbremse, mit einem schwenkbar gelagerten Betätigungshebel, der mittels einer Koppeleinrichtung, insbesondere einer Zugstange, mit einem Bremskraftübertragungsmittel, insbesondere einer Seilrolle, in Wirkverbindung steht, wobei der Betätigungshebel zwischen einer Lösestellung und einer Bremsstellung schwenkbar ist und in der Bremsstellung eine Totpunktverriegelung des Betätigungshebel vorgesehen ist.

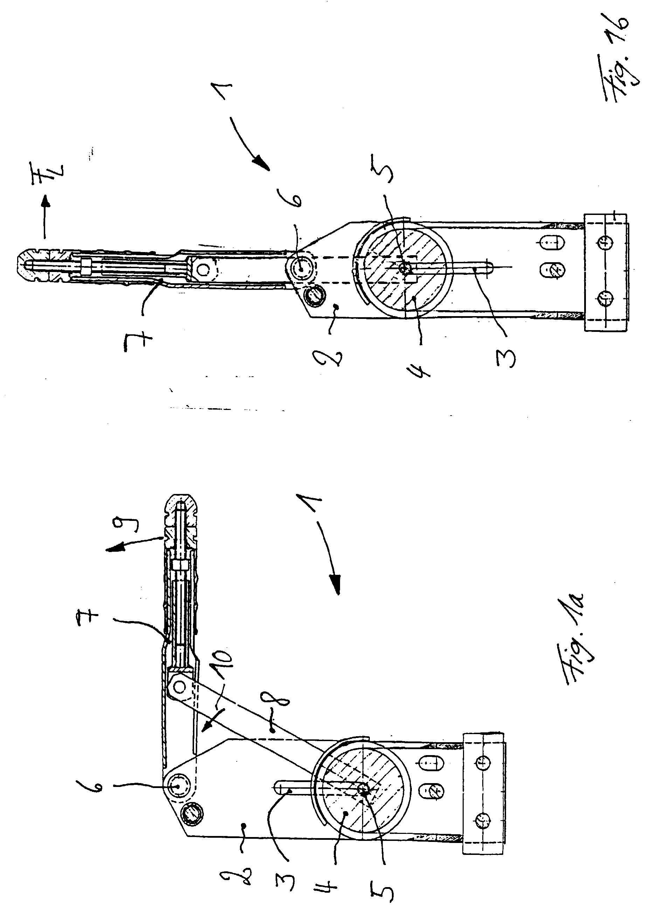

In den Figuren 1a und 1b ist eine gattungsgemäße Betätigungseinrichtung 1 für eine Bremse gezeigt. Die Bremse ist beispielsweise als Seilzugbremse ausgebildet, die in Fahrzeugen, beispielsweise Flurförderzeugen, insbesondere Gabelstaplern, als handbetätigte Feststellbremse verwendet wird. Die Betätigungseinrichtung 1 weist ein Trägerelement 2 auf, das an einem nicht mehr gezeigten Fahrzeugrahmen befestigt ist. In dem Trägerelement 2 ist eine als Langloch ausgebildete Gleitöse 3 angeordnet, in der eine beispielsweise als Seilrolle ausgebildetes Bremskraftübertragungsmittel 4 längsverschiebbar gelagert ist. Das Bremskraftübertragungsmittel 4 ist hierbei mit einem Lagerstift 5 versehen, der in der Gleitöse 3 längsverschiebbar angeordnet ist. Um das als Seilrolle ausgebildete Bremskraftübertragungsmittel 4 ist hierbei ein Bremsseil gewickelt, das zur Übertragung der an einem Betätigungshebel 7 ausgeübten Bremskraft auf die Bremse dient. Der Betätigungshebel 7 ist hierbei an dem Trägerelement 2 um eine von einem Gelenk gebildete Schwenkachse 6 schwenkbar angeordnet, wobei der Betätigungshebel 7 mit einer als Zugstange ausgebildeten Koppeleinrichtung 8 mit dem als Seilrolle ausgebildeten Bremskraftübertragungsmittel 4 in Wirkverbindung steht. Das Koppelelement 8 ist hierbei gelenkig mit dem Betätigungshebel 7 und dem Bremskraftübertragungsmittel 4 verbunden.

In der Figur 1a ist die Betätigungseinrichtung 1 in der Lösestellung der Bremse gezeigt, wobei der Betätigungshebel 7 nahezu senkrecht zur Gleitöse des Trägerelements 2 angeordnet ist. Zur Betätigung der Bremse in die Bremsstellung wird der Betätigungshebel 7 in Richtung 9 entgegen dem Uhrzeigersinn um die Schwenkachse 6 verschwenkt. Hierdurch wird gleichzeitig die Koppeleinrichtung 8 in Richtung 10 verschwenkt, wobei durch die Bewegung des Koppelelements 8 das Bremskraftübertragungsmittel 4 in der Gleitöse 3 nach in der Figur 1a oben beaufschlagt und somit die Bremse in die Bremsstellung beaufschlagt wird. In der Figur 1b ist die Betätigungseinrichtung 1 in der Bremsstellung gezeigt. Der Betätigungshebel 7 und die Koppeleinrichtung 8 sind hierbei parallel zur Gleitöse 3 angeordnet, wodurch eine Totpunktverriegelung des Betätigungshebels 7 in der Bremsstellung erzielt wird.

Bei einer derartigen Betätigungseinrichtung 1 mit einer Totpunktverriegelung des Betätigungshebels 7 in der Bremsstellung kann jedoch bei in der Bremsstellung befindlichem Betätigungshebel 7 durch einen zufälligen Stoß in Richtung der Lösekraft F_{L} des Betätigungshebels 7, beispielsweise während des Auf- bzw. Absteigens des Fahrers bei einem in einer Durchgangszone angeordneten Betätigungshebel 7, der Betätigungshebel 7 aus der in der Figur 1b gezeigten Gleichgewichtslage gebracht werden, wobei der Betätigungshebel 7 in die in die Figur 1a gezeigte Lage zurückspringt und die Bremse in die Lösestellung beaufschlagt wird. Eine derartige Betätigungseinrichtung mit einer Totpunktverriegelung des Betätigungshebels in der Bremsstellung weist somit Sicherheitsmängel auf.

Der vorliegenden Erfindung liegt die Aufgabe zugrunde, eine Betätigungseinrichtung für eine Bremse mit einer Totpunktverriegelung in der Bremsstellung zur Verfügung zu stellen, die eine hohe Sicherheit aufweist.

Diese Aufgabe wird erfindungsgemäß dadurch gelöst, daß eine Feststelleinrichtung für den Betätigungshebel in der Bremsstellung vorgesehen ist, wobei die Lösekraft der Feststelleinrichtung und die Lösekraft des Betätigungshebels unterschiedliche Richtungen aufweisen.

Erfindungsgemäß ist somit eine Feststelleinrichtung vorgesehen, die den Betätigungshebel in der Bremsstellung hält, wobei die Lösekraft der Feststelleinrichtung und die Lösekraft des Betätigungshebels unterschiedliche Richtungen aufweisen. Zum Betätigen der Bremse in die Lösestellung muß somit eine Lösekraft für die Feststelleinrichtung und eine Lösekraft für den Betätigungshebel aufgebracht werden. Durch die unterschiedlichen Kraftrichtungen der Lösekraft des Betätigungshebel und der Lösekraft der Feststelleinrichtung wird hierbei mit geringem Aufwand vermieden, daß bei einem zufälligen Stoß in Richtung der Lösekraft des Betätigungshebels der Betätigungshebel aus der Gleichgewichtslage gebracht wird und somit die Bremse in die Lösestellung beaufschlagt wird, da durch die von der Lösekraft des Betätigungshebels unterschiedliche Kraftrichtung der Lösekraft der Feststelleinrichtung die Feststelleinrichtung durch den Stoß nicht gelöst wird. Dadurch wird eine hohe Sicherheit der Betätigungseinrichtung gegen eine unbeabsichtigte Beaufschlagung der Bremse in die Lösestellung erzielt.

In einer vorteilhaften Ausführungsform der Erfindung ist die Lösekraft der Feststelleinrichtung im wesentlichen senkrecht zur Lösekraft des Betätigungshebels. Dadurch kann auf einfache Weise wirksam vermieden werden, daß bei einem zufälligen Stoß in Richtung der Läsekraft des Betätigungshebel die Feststelleinrichtung gelöst wird.

In einer Ausgestaltungsform der Erfindung weist die Feststelleinrichtung einen an dem Betätigungshebel angeordneten Sperrbolzen auf, der in der Bremsstellung mit einer an der Koppeleinrichtung angeordneten Sperrplatte in Wirkverbindung bringbar ist. Durch einen mit einer Sperrplatte in der Bremsstellung des Betätigungshebels in Wirkverbindung stehenden Sperrbolzen kann auf einfache Weise eine Feststelleinrichtung für den Betätigungshebel in der Bremsstellung gebildet werden.

Zweckmäßigerweise ist die Sperrplatte in Längsrichtung der Koppeleinrichtung und der Sperrbolzen senkrecht zur Koppeleinrichtung angeordnet. Dadurch kann mit geringem Bauaufwand eine aus einer Sperrplatte und einem Sperrbolzen bestehende Feststelleinrichtung gebildet werden, deren Lösekraft senkrecht zur Lösekraft des Betätigungshebels ist.

Mit besonderem Vorteil weist die Sperrplatte eine in Längsrichtung der Koppeleinrichtung angeordnete Sperrfläche auf, wobei in der Bremsstellung der Sperrbolzen mit der Sperrfläche in Wirkverbindung steht. Durch eine derartige Sperrfläche, an der der Sperrbolzen in der Bremsstellung anliegt, kann auf einfache der Betätigungshebel durch den Sperrbolzen in der Bremsstellung gehalten werden.

In einer Weiterbildung der Erfindung weist die Sperrplatte eine der Sperrfläche gegenüberliegende, in Längsrichtung der Koppeleinrichtung angeordnete Fläche auf, die mit einer Abschrägung versehen ist. Durch die Abschrägung wird hierbei erzielt, daß bei einer Betätigung des Betätigungshebels von der Lösestellung in die Bremsstellung und somit einer Verschwenkung der Koppeleinrichtung relativ zum Betätigungshebel der Sperrbolzen über die Sperrplatte gleiten kann und somit in der Bremsstellung mit der Sperrfläche in Wirkverbindung gelangen kann.

Zweckmäßigerweise ist der Sperrbolzen mittels einer Feder in Richtung der Koppeleinrichtung beaufschlagbar. Dadurch kann auf einfache Weise ein unbeabsichtigtes Lösen der Feststelleinrichtung verhindert werden, da zum Lösen der Feststelleinrichtung eine der Kraft der Feder entgegenwirkende Lösekraft aufgebracht werden muß.

In einer Weiterbildung steht der Sperrbolzen mit einer Entriegelungseinrichtung in Wirkverbindung. Der Sperrbolzen kann durch eine Entriegelungseinrichtung auf einfache Weise entgegen der Kraft der Feder beaufschlagt und somit die Feststelleinrichtung gelöst werden.

In einer Ausgestaltungsform ist die Entriegelungseinrichtung als Entriegelungshebel ausgebildet. Sofern der Entriegelungshebel um eine Schwenkachse drehbar gelagert ist, die senkrecht zur Schwenkachse des Betätigungshebels ist, kann auf einfache Weise eine an dem Entriegelungshebel aufzubringende Lösekraft erzielt werden, die senkrecht zur Lösekraft des Betätigungshebels ist.

Zweckmäßigerweise ist hierbei der Entriegelungshebel an einer Seitenfläche des Betätigungshebels angeordnet. Dadurch kann mit geringem Aufwand die Schwenkachse des Entriegelungshebels senkrecht zur Schwenkachse des Betätigungshebels angeordnet, wodurch senkrechte Lösekräfte der Feststelleinrichtung und des Betätigungshebels erzielt werden.

Ein geringer Bauaufwand für den Sperrbolzen ergibt sich, wenn der Sperrbolzen am Entriegelungshebel angeformt ist.

Sofern die Feder mit dem Entriegelungshebel in Verbindung steht, kann mit geringem Aufwand der Sperrbolzen in Richtung der Koppeleinrichtung beaufschlagt werden.

Zudem ist ein Ausgestaltung möglich, bei der die Entriegelungseinrichtung als Druckknopf ausgebildet ist. Mit einem Druckknopf kann ebenfalls auf einfache Weise die Feststelleinrichtung gelöst werden und senkrechte Lösekräfte erzielt werden.

Besondere Vorteile ergeben sich bei der Verwendung der Betätigungseinrichtung für eine handbetätigte Feststellbremse eines Flurförderzeugs, insbesondere eines Gabelstaplers. Bei Flurförderzeugen ist der Betätigungshebel der Feststellbremse beispielsweise durch eine Befestigung an der Vorderkonsole des Fahrerarbeitsplatzes in einer Durchgangszone angeordnet, die der Fahrer beim Auf- bzw. Absteigen passieren muß. Mit der erfindungsgemäßen Betätigungseinrichtung wird hierbei eine hohe Sicherheit erzielt, da bei einem unbeabsichtigten Stoß in Richtung der Lösekraft des Betätigungshebels während des Auf- bzw. Absteigens eine Beaufschlagung des Betätigungshebels in die Lösestellung der Feststellbremse vermieden werden kann.

Weitere Vorteile und Einzelheiten der Erfindung werden anhand des in den schematischen Figuren dargestellten Ausführungsbeispiels näher erläutert. Dabei zeigt
- Figur 1a: eine Betätigungseinrichtung des Standes der Technik in der Lösestellung,
- Figur 1b: eine Betätigungseinrichtung des Standes der Technik in der Bremsstellung,
- Figur 2: einen Betätigungshebel einer Betätigungseinrichtung gemäß der Erfindung in der Lösestellung,
- Figur 3: einen Betätigungshebel einer Betätigungseinrichtung gemäß der Erfindung in der Lösestellung und,
- Figur 4: einen Betätigungshebel einer Betätigungseinrichtung gemäß der Erfindung in der Bremsstellung.

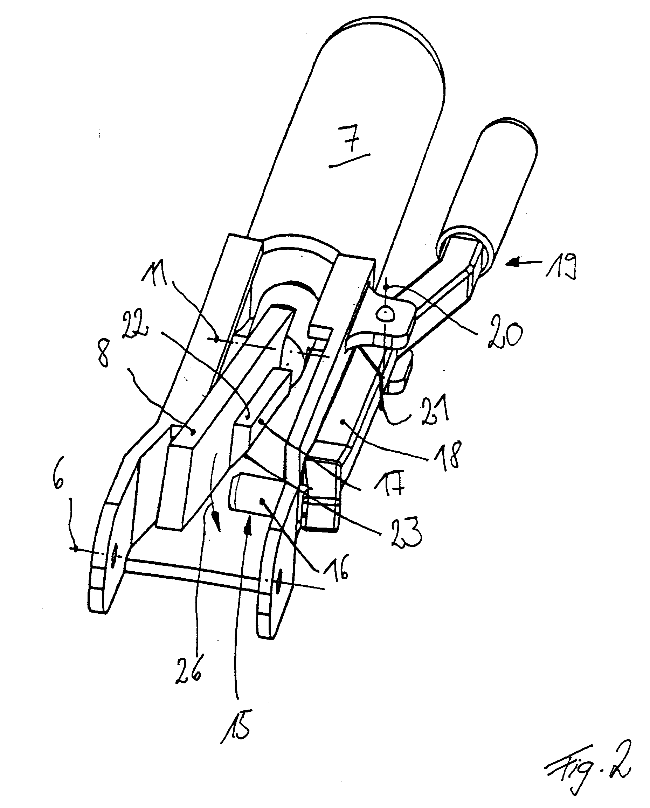

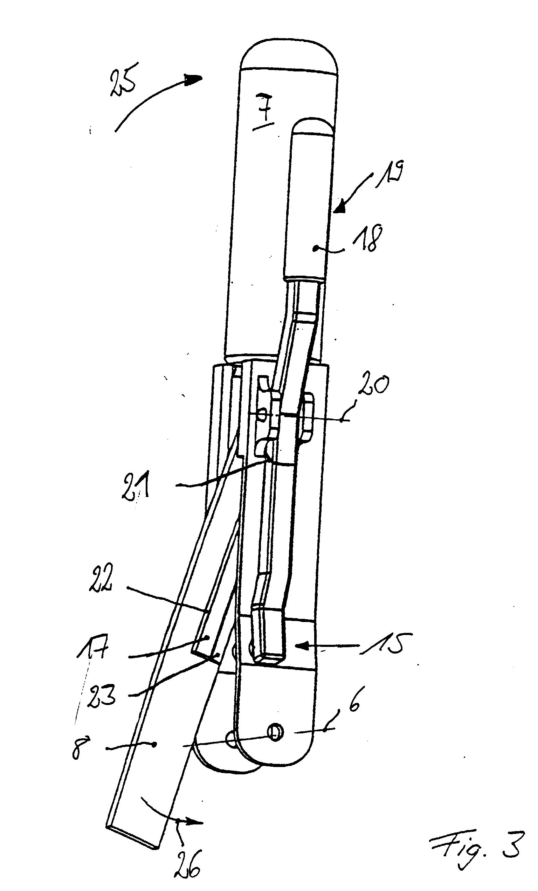

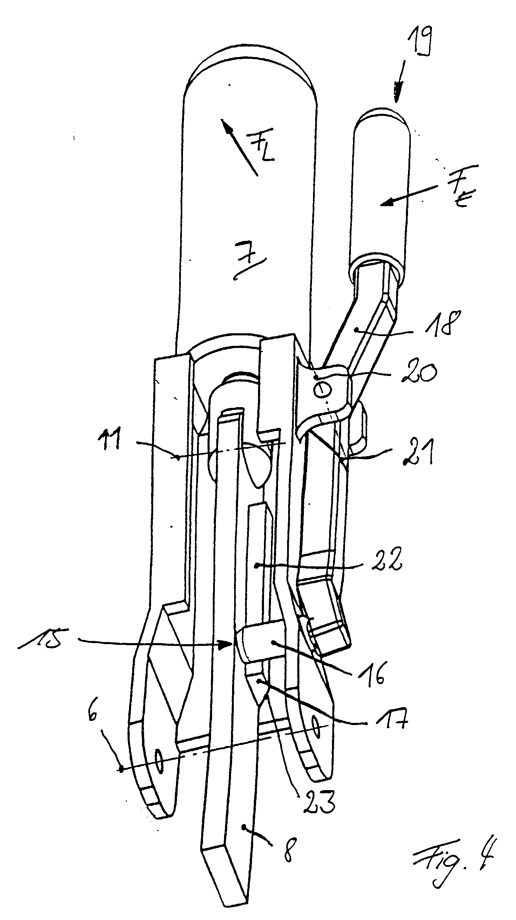

Die Figuren 2 bis 4 zeigen einen Betätigungshebel 7 einer Betätigungseinrichtung 1 gemäß der Erfindung in einer perspektivischen Darstellung. In den Figuren 2 und 3 ist der Betätigungshebel 7 in der Lösestellung der Bremse gezeigt. In der Figur 4 befindet sich der Betätigungshebel 7 in der Bremsstellung der Bremse. Der Betätigungshebel 7 ist hierbei um die durch eine Bohrung definierte Schwenkachse 6 schwenkbar an einem nicht mehr dargestellten Trägerelement gelagert. Der Betätigungshebel 7 steht weiterhin mittels einer Koppeleinrichtung 8, beispielsweise einer Zugstange, mit einem nicht mehr dargestellten Bremskraftübertragungsmittel, beispielsweise einer Seilrolle für ein Bremsseil, in Verbindung. Die Koppeleinrichtung 8 ist hierbei schwenkbar an dem Betätigungshebel 7 befestigt, wobei die Schwenkachse 11 der Koppeleinrichtung 8 parallel zur Schwenkachse 6 des Betätigungshebels 7 ist. Der Betätigungshebel 7 gemäß den Figuren 2 bis 4 kann somit auf einfache Weise anstelle eines Betätigungshebels 7 der Figur 1 an einem üblichen Trägerelement 2 angebaut werden, das mit einem als Seilrolle ausgebildeten Bremskraftübertragungsmittel versehen ist.

Erfindungsgemäß ist eine Feststelleinrichtung 15 für den Betätigungshebel 7 in der Bremsstellung vorgesehen, die einen an dem Betätigungshebel 7 angeordneten Sperrbolzen 16 aufweist, der mit einer an der Koppeleinrichtung 8 angeordneten Sperrplatte 17 in Wirkverbindung bringbar ist. Die Sperrplatte 17 ist hierbei in Längsrichtung der Koppeleinrichtung 8 angeordnet. Der Sperrbolzen 16 ist an einer als Entriegelungshebel 18 ausgebildeten Entriegelungseinrichtung 19 angeformt, wobei der Sperrbolzen 16 senkrecht zur Koppeleinrichtung 8 angeordnet ist. Der Entriegelungshebel 18 ist hierbei an einer Seitenfläche des Betätigungshebels 7 schwenkbar befestigt. Der Entriegelungshebel 18 ist somit um eine Schwenkachse 20 drehbar befestigt, die senkrecht zur Schwenkachse 6 des Betätigungshebels 7 ist.

An dem Entriegelungshebel 18 ist eine Feder 21 angeordnet, die den Entriegelungshebel 18 und somit den Sperrbolzen 16 in Richtung der Koppeleinrichtung 8 beaufschlagen. Die Sperrplatte 17 weist hierbei eine Sperrfläche 22 und eine der Sperrfläche 22 gegenüberliegende mit einer Abschrägung versehene Fläche 23 auf, wobei der Sperrbolzen 16 an der Spitze, die der Sperrplatte 17 zugewandt ist, mit einer Fase versehen.

Bei einer Betätigung des Betätigungshebels 7 ausgehend von der in der Figur 2 oder 3 dargestellten Lösestellung in die in der Figur 4 dargestellte Bremsstellung wird der Betätigungshebel 7 in Richtung 25 um die Schwenkachse 6 verschwenkt, wobei die Koppeleinrichtung 8 in Richtung 26 relativ zum Betätigungshebel 7 verschwenkt wird. Dadurch wird das als Seilrolle ausgebildete Bremskraftübertragungsmittel entlang der Gleitöse bewegt und somit die Bremse in die Bremsstellung beaufschlagt.

Bei der Verschwenkung der Koppeleinrichtung 8 relativ zum Betätigungshebel 7 nähert sich die mit der Abschrägung versehenen Fläche 23 der Sperrplatte 17 dem Sperrbolzen 16, wobei bei einem Kontakt des Sperrbolzens 16 mit der Fläche 23 durch die Abschrägung der Fläche 23 und die an der Spitze des Sperrbolzens 16 ausgebildete Fase der Sperrbolzen 16 zusammen mit dem Entriegelungshebel 18 entgegen der Feder 21 verschwenkt wird. Sobald die Koppeleinrichtung 8 soweit in Richtung 26 verschwenkt ist, daß der Sperrbolzen 16 die Sperrplatte 17 überwunden hat, gelangt der Sperrbolzen 16 durch die Feder 21 in Wirkverbindung mit der Sperrfläche 22. Der Betätigungshebel 7 befindet sich hierbei in der Bremsstellung, in der die Koppeleinrichtung 8 parallel zum Betätigungshebel 7 ist, wobei der Betätigungshebel 7 durch die aus dem Sperrbolzen 16 und der Sperrplatte 17 bestehenden Feststelleinrichtung 15 in der Bremsstellung gehalten wird. Diese Bremsstellung des Betätigungshebel 7 ist in der Figur 4 dargestellt.

Durch die Anlage des Sperrbolzens 16 an der Sperrfläche 22 wird somit verhindert, daß bei in der Bremsstellung befindlichem Betätigungshebel 7 der Betätigungshebel 7 durch einen zufälligen Stoß in Richtung der Lösekraft F_{L} des Betätigungshebels 7 in die Lösestellung verschwenkt wird, wodurch eine hohe Sicherheit erzielt werden kann.

Durch die Anordnung des Entriegelungshebels 18 an einer Seitenfläche des Betätigungshebels 7 wird hierbei erzielt, daß die Schwenkachse 20 des Entriegelungshebels 18 senkrecht zur Schwenkachse 6 des Betätigungshebels 7 ist, wodurch die Lösekraft F_{E} der Feststelleinrichtung 15 senkrecht zur Lösekraft F_{L} des Betätigungshebels 7 ist. Dadurch wird auf einfache Weise verhindert, daß eine zufällig aufgebrachte Lösekraft F_{L}, beispielsweise durch einen Stoß mit dem Bein während des Auf- bzw. Absteigens des Fahrers, zum Lösen der Bremse führt.

Zur Beaufschlagung der Bremse in die Lösestellung ist der Entriegelungshebel 18 und somit die Feststelleinrichtung 15 durch die Lösekraft F_{E} und gleichzeitig der Betätigungshebel 7 durch die Lösekraft F_{L} zu beaufschlagen. Durch die der Kraft der Feder 21 entgegengerichtete Läsekraft F_{E} wird hierbei der Sperrbolzen 16 von der Sperrfläche 22 getrennt, wodurch der Betätigungshebel 7 durch die Lösekraft F_{L} in die Lösestellung verschwenkt werden kann.

Die aus der Sperrplatte 17, dem Sperrbolzen 16 und der Entriegelungseinrichtung 19 bestehende Feststelleinrichtung 15 kann hierbei auf einfache Weise an einem Betätigungshebel 7 des Standes der Technik angebaut werden.

## Patentansprüche

1. Betätigungseinrichtung für eine Bremse, insbesondere einer als Seilzugbremse ausgebildete Feststellbremse, mit einem schwenkbar gelagerten Betätigungshebel, der mittels einer Koppeleinrichtung, insbesondere einer Zugstange, mit einem Bremskraftübertragungsmittel, insbesondere einer Seilrolle, in Wirkverbindung steht, wobei der Betätigungshebel zwischen einer Lösestellung und einer Bremsstellung schwenkbar ist und in der Bremsstellung eine Totpunktverriegelung des Betätigungshebels vorgesehen ist, **dadurch gekennzeichnet**, daß eine Feststelleinrichtung (15) für den Betätigungshebel (7) in der Bremsstellung vorgesehen ist, wobei die Lösekraft (F_{E}) der Feststelleinrichtung (15) und die Lösekraft (F_{L}) des Betätigungshebels (7) unterschiedliche Richtungen aufweisen.

2. Betätigungseinrichtung nach Anspruch 1, dadurch gekennzeichnet, daß die Läsekraft (F_{E}) der Feststelleinrichtung (15) im wesentlichen senkrecht zur Lösekraft (F_{L}) des Betätigungshebels (7) ist.

3. Betätigungseinrichtung nach Anspruch 1 oder 2, dadurch gekennzeichnet, daß die Feststelleinrichtung (15) einen an dem Betätigungshebel (7) angeordneten Sperrbolzen (16) aufweist, der in der Bremsstellung mit einer an der Koppeleinrichtung (8) angeordneten Sperrplatte (17) in Wirkverbindung bringbar ist.

4. Betätigungseinrichtung nach Anspruch 3, dadurch gekennzeichnet, daß die Sperrplatte (17) in Längsrichtung der Koppeleinrichtung (8) angeordnet ist und der Sperrbolzen (16) senkrecht zur Koppeleinrichtung (8) angeordnet ist

5. Betätigungseinrichtung nach Anspruch 3 oder 4, dadurch gekennzeichnet, daß die Sperrplatte (17) eine in Längsrichtung der Koppeleinrichtung (8) angeordnete Sperrfläche (22) aufweist, wobei in der Bremsstellung der Sperrbolzen (16) mit der Sperrfläche (22) in Wirkverbindung steht.

6. Betätigungseinrichtung nach Anspruch 5, dadurch gekennzeichnet, daß die Sperrplatte (17) eine der Sperrfläche (22) gegenüberliegende, in Längsrichtung der Koppeleinrichtung (8) angeordnete Flache (23) aufweist, die mit einer Abschrägung versehen ist.

7. Betätigungseinrichtung nach einem der Ansprüche 3 bis 6, dadurch gekennzeichnet, daß der Sperrbolzen (16) mittels einer Feder (21) in Richtung der Koppeleinrichtung (8) beaufschlagbar ist.

8. Betätigungseinrichtung nach einem der Ansprüche 3 bis 7, dadurch gekennzeichnet, daß der Sperrbolzen (16) mit einer Entriegelungseinrichtung (19) in Wirkverbindung steht.

9. Betätigungseinrichtung nach Anspruch 8, dadurch gekennzeichnet, daß die Entriegelungseinrichtung (19) als Entriegelungshebel (18) ausgebildet ist.

10. Betätigungseinrichtung nach Anspruch 9, dadurch gekennzeichnet, daß der Entriegelungshebel (18) um eine Schwenkachse (20) drehbar gelagert ist, die senkrecht zu einer Schwenkachse (6) des Betätigungshebels (7) ist.

11. Betätigungseinrichtung nach Anspruch 9 oder 10, dadurch gekennzeichnet, daß der Entnegelungshebel (18) an einer Seitenfläche des Betätigungshebels (7) angeordnet ist.

12. Betätigungseinrichtung nach einem der Ansprüche 3 bis 11, dadurch gekennzeichnet, daß der Sperrbolzen (16) am Entriegelungshebel (18) angeformt ist.

13. Betätigungseinrichtung nach einem der Ansprüche 7 bis 12, dadurch gekennzeichnet, daß die Feder (21) mit dem Entriegelungshebel (19) in Verbindung steht.

14. Betätigungseinrichtung nach Anspruch 8, dadurch gekennzeichnet, daß die Entriegelungseinrichtung (19) als Druckknopf ausgebildet ist.

15. Verwendung der Betätigungseinrichtung nach einem der vorangegangenen Ansprüche für eine handbetätigte Feststellbremse eines Flurförderzeugs, insbesondere eines Gabelstaplers.
